# FASCICULE DE BREVET EUROPEEN

(11) **EP 2 435 505 B1**
(45) Date de publication et mention de la délivrance du brevet: **08.10.2014**
(21) Numéro de dépôt: 10728793.0
(22) Date de dépôt: 20.05.2010
(51) Int. Cl.: B29C 70/38, B29L 31/34, C08J 5/04, C08J 5/24, H01Q 1/42

(54) **RUBAN DIELECTRIQUE PREIMPREGNE POUR RADOME**
DIELEKTRISCHES PREPREGES BAND FÜR RADOMWERKSTOFF
DIELECTRIC PREPREG RIBBON FOR RADOME

(30) Priorité: 29.05.2009 FR 0953582
(43) Date de publication de la demande: 04.04.2012
(73) Titulaire: Saint-Gobain Quartz S.A.S., 92400 Courbevoie (FR)
(72) Inventeur: MOLINS, Laurent, F-77460 Souppes Sur Loing (FR)
(74) Mandataire: Colombier, Christian
(86) Numéro de dépôt international: PCT/FR2010/050978
(87) Numéro de publication internationale: WO 2010/136703

(56) Documents cités:
- EP-A1- 0 357 006
- EP-A1- 1 693 180
- WO-A1-2008/128708
- DE-A1- 3 421 196
- US-A- 4 353 769
- US-A- 5 849 234
- US-A- 6 028 565

## Description

L'invention concerne le domaine des radomes en matériaux composites.

Un radome est placé la plupart du temps sur un engin ou véhicule volant (dans certains cas également sur des installations ou véhicules terrestres ou maritime) et protège un radar des sollicitations extérieures. Ces sollicitations sont notamment climatiques et environnementales (pluie, vent, chaleur humide, brouillard salin...), auxquelles s'ajoutent des contraintes thermiques en stockage et service (généralement de -60°C à +150°C voir plus de +350°C). Le terme radome recouvre les fenêtres électromagnétiques qui sont de petits radomes généralement placées sous les ailes d'engins volants.

Il présente généralement une forme de dôme ou de cône et est généralement situé en nez dudit engin ou véhicule. Il doit posséder une forte résistance à l'impact, aux chocs, aux vibrations, à la pression, aux charges aérodynamiques et présenter des propriétés diélectriques compatibles avec la présence du radar, c'est-à-dire être le plus transparent possible aux ondes électromagnétiques. Un tel radome en matériau composite comprend de la fibre diélectrique et une matrice diélectrique. Ces radomes sont habituellement fabriqués par imprégnation d'une structure fibreuse du type chaussette ou réalisée par drapage de tissu plan. Selon la technologie du drapage de tissu plan, on découpe un tissu plan en plusieurs morceaux, lesquels sont assemblés en surface d'un moule à la forme souhaitée. Cela implique une forte perte de matière et un fort coût de main d'oeuvre. La reproductibilité de la superposition des différentes couches est difficile. Dans la technologie de la chaussette, on passe un fil de trame entre des fils de chaîne en laissant de côté des fils de chaîne au fur et à mesure de la progression du tissage pour suivre la diminution de diamètre quand on se rapproche de l'extrémité du dôme ou cône. La partie des fils de chaîne non incorporés dans le tissage représente une perte de matière importante. Ici également, la réalisation d'une forme suivant bien les cotes souhaitées de façon reproductible est difficile. Le composite est alors réalisé par procédé RTM ou thermoformage (presse, autoclave). Une autre technique utilisée est le drapage de pré imprégné (tissu plan imprégné de résine découpé à la forme) suivi d'un traitement en étuve et autoclave.

Selon ces technologies, les taux de rebut et de perte matière sont particulièrement élevés. La perte de matière première est de l'ordre de 20% et peut monter à plus de 50%. L'impact économique est particulièrement important dans le cas de renforts onéreux comme notamment la fibre de quartz ou le verre D. On réalise de plus très difficilement par ces techniques des formes de radome non symétriques et de révolution. Par tissage classique ou jacquard une forme non de révolution est en effet extrêmement difficile à réaliser. Par drapage, l'homogénéité des épaisseurs est difficile à obtenir sur une pièce non de révolution.

La technique de l'enroulement filamentaire est peu utilisée depuis de nombreuses années sur pièces de type radome car il est difficile par cette technologie de renforcer la pièce composite selon l'ensemble des directions requises, ce qui limite fortement les propriétés mécaniques finales.

L'invention résout les problèmes susmentionnés. Selon l'invention, on a eu l'idée d'utiliser la technologie dite du placement de fibres pour réaliser un radome diélectrique. Selon cette technique, une machine programmée dépose sur un moule et à un endroit précis prédéterminé une certaine longueur d'un ruban pré imprégné de résine puis le découpe, puis dépose à un autre endroit une autre longueur du même ruban pré imprégné puis le découpe également et ainsi de suite. La résine présente un collant (propriété d'être collante généralement appelée tack) suffisant pour que le ruban déposé par cette technique adhère là où il a été déposé par la machine et conserve bien la forme de ce qui le supporte. Les longueurs de chaque brin de ruban déposé vont généralement de 1 à 300 cm. Du fait de la longueur finie de chaque brin, il est possible de réaliser très précisément la forme d'un radome à axe de révolution ou non. Il est en effet possible par cette technique de bien suivre les surfaces présentant des courbures dans toutes les directions comme les dômes. Une surface est courbée dans toutes les directions en un point donné si toute tangente en ce point à cette surface ne touche cette surface qu'en ce point.

L'invention concerne en premier lieu un ruban comprenant de la fibre diélectrique pré imprégné d'une résine diélectrique. Toutes les valeurs de constante diélectrique et de tangente diélectrique contenues dans la présente demande sont données à 20°C et 9,375 Ghz. La fibre contenue dans le ruban présente une constante diélectrique comprise entre 2 et 7 et une tangente diélectrique comprise entre 1.10⁻⁵ et 3.10⁻² (on rappelle qu'une constante diélectrique et une tangente diélectrique sont des nombres sans unité). La résine contenue dans le ruban présente une constante diélectrique comprise entre 2 et 5 et une tangente diélectrique entre 1.10⁻⁴ et 3.10⁻².

Le ruban présente une constante diélectrique comprise entre 2 et 7 et une tangente diélectrique comprise entre 1.10⁻⁴ et 3.10⁻². Sa constante diélectrique est de préférence inférieur à 3,5. Les valeurs de constante diélectrique et de tangente diélectrique du ruban sont la conséquence des valeurs de constante diélectrique et de tangente diélectrique de ses constituants (fibres et résine) et l'on choisit donc ceux-ci en fonction de ce que l'on recherche au niveau du ruban.

L'invention concerne en premier lieu un ruban continu comprenant une structure fibreuse comprenant de la fibre continu ou discontinue et une résine présentant du collant à une température allant de la température ambiante à 300°C ledit ruban présentant à 20°C et 9,375 Ghz une constante diélectrique comprise entre 2 et 7 et une tangente diélectrique comprise entre 1.10⁻⁴ et 3.10⁻², ladite structure fibreuse étant suffisamment rigide pour que ledit ruban présente une rigidité comprise entre 5 et 30° à une température à laquelle ladite résine présente du collant, la rigidité du ruban étant mesurée sur un segment de 15 cm de long rectiligne dont 5 cm sont posés sur le bord d'une surface horizontale, les 10 cm restant étant non supportés et s'affaissant progressivement pour se stabiliser et former un angle avec l'horizontale, ledit angle caractérisant la rigidité du ruban.

Avant d'être incorporée au ruban selon l'invention, la fibre peut être assemblée dans des fils continus constitué de filaments continus. Avant d'être incorporé au ruban selon l'invention, la fibre peut aussi être assemblée dans des fils continus constitué de fibres discontinus. Une fibre discontinue a une longueur allant généralement de 200 µm à 50 cm. Au-delà de 50 cm de longueur, on parle généralement de fibre continue (ou fil continu en cas d'association de plusieurs fibres continues et contigües). Le ruban peut aussi contenir de la fibre continue et de la fibre discontinue.

Afin de pouvoir être utilisé correctement sur le procédé de placement de fibres, le ruban imprégné présente une rigidité suffisante à la température choisie pour le placement de fibre, sans quoi la maitrise du procédé de placement de fibres est rendue difficile. Pour mesurer cette rigidité, on prend un morceau de ruban de 15 cm de long (notamment de 6,35 mm de large) dont on pose 5 cm à plat et au bord d'une surface horizontale. Il y a donc 10 cm du ruban qui n'est pas supporté par ladite surface et qui pend plus ou moins dans l'air. C'est l'angle formé entre l'horizontale et le segment de ruban (contenant de la résine non durcie) de 10 cm pendant dans l'air que l'on mesure et qui est caractéristique de la rigidité. Cet angle est compris entre 5° et 30° et de préférence entre 8° et 22°.

Le choix le la fibre de renfort est fait en fonction des contraintes thermiques, diélectriques et mécaniques tolérées. Cette fibre peut notamment être à base de silice, c'est-à-dire contenir plus de 50% en poids de SiO₂ comme dans le cas du verre (E, D, S2, R, low K, low Dk) ou de la fibre de silice (comprenant plus de 90% en poids de SiO₂), ou de la fibre de quartz (comprenant plus de 95% en poids de SiO₂) notamment commercialisée sous la marque Quartzel par Saint-Gobain Quartz S.A.S. On peut également utiliser de la fibre Aramide, polyéthylène haute ténacité (PEHT), polyétherimide (PEI), polyétheréthercétone (PEEK), Polytetrafluoroethylene PTFE. Le ruban peut aussi comprendre plusieurs types de fibres, par exemple de la fibre de quartz et de la fibre polyester.

La résine peut être thermodurcissable ou thermoplastique. Elle est généralement thermodurcissable. Elle est de préférence du type époxy ou cyanate ester. Elle peut également être en bismaldéhyde (BMI), Polyimide, PEEK, PEI, polysulfure de phénylene (PPS) ou polyester.

Le tableau 1 ci-dessous donne les propriétés de quelques fibres pouvant être utilisées pour réaliser le ruban selon l'invention.

**Tableau 1 : Fibres de Renforcement**

| **Fibres** | **Densité (g/cm3)** | **Constante diélectrique** | **tangente diélectrique** | **Module E (Gpa)** | **Resistance traction** | **Allongements** |
|---|---|---|---|---|---|---|
| PEHT | 0,97 | 2,2 | 0,0003 | 100 | 2700 | 3,5 |
| PEI | 1,22 | 3,5 | 0,01 | 4 | 100 | 30 |
| PEEK | 1,3 | 3,1 | 0,004 | 3,5 | 793 | 20 |
| Aramide | 1,45 | 3,85 | 0,012 | 160 | 2400 | 1,5 |
| PTFE | 2,1 | 2,08 | 0,0001 | 2,5 | 359 | 19 |
| Verre D | 2,14 | 4 | 0,0026 | 55 | 2500 | 4,5 |
| Silice (Quartzel) | 2,2 | 3,78 | 0,0001 | 72 | 3600 | 4à7% |
| Verre S2 | 2,46 | 5,2 | 0,006 | 87 | 4890 | 5,7 |
| Verre R | 2,54 | 6 | 0,005 | 86 | 4400 | 5,2 |
| Verre E | 2,59 | 6,13 | 0,004 | 73 | 3400 | 4,5 |
| Verre Low K | | 4.5-5 | 0.0053 | | | |

Le tableau 2 ci-dessous donne les propriétés de quelques résines pouvant être utilisées pour réaliser le ruban selon l'invention.

**Tableau 2 : Résines**

| **Résine** | **Tg (°C)** | **Densité (g/cm3)** | **Constante diélectrique** | **Tangente diélectrique** | **Type de résine** |
|---|---|---|---|---|---|
| Epoxy | 120-200 | 1,1-1,4 | 2,9-3,4 | 0,02 | Thermodurcissable |
| Cyanate-Ester | 190-290 | 1,1-1,4 | 2,7-2,9 | 0,002-0,005 | Thermodurcissable |
| BMI | 220-280 | 1,25 | 2,9-3,2 | 0,009-0,01 | Thermodurcissable |
| Polyimide | 250-350 | 1-1,35 | 2,8-3,2 | 0,005-0,014 | Thermodurcissable |
| PEEK | 250-300 | 1,26-1,32 | 3,2-3,3 | 0,004 | Thermoplastique |
| PEI | 170-200 | 1,27 | 3,2 | 0,01 | Thermoplastique |
| PPS | 200-240 | 1,30 | 3,2 | 0,001-0,0013 | Thermoplastique |

Le taux de fibres dans le ruban est généralement supérieur à 30% en volume et généralement inférieur à 80% en volume.

Le choix de la formulation de résine, des adjuvants éventuels (par exemple un plastifiant comme le polyadipate de polyéthylène glycol), et de la structure fibreuse est réalisé afin permettre d'obtenir un ruban imprégné possédant une rigidité entre 5° et 30° et de préférence entre 8° et 22°.

La rigidité est mesurée à la température prévue pour le placement de fibre (par exemple à la température ambiante, par exemple à 20°C) sur le ruban imprégné de résine (donc non polymérisé dans le cas d'une résine thermodurcissable) présentant du tack.

La rigidité du ruban est essentiellement gouvernée par d'une part la rigidité de la structure fibreuse, et d'autre part par la viscosité de la résine. On peut compenser le manque de consistance de l'un de ces deux ingrédients en augmentant celle de l'autre. Pour une résine donnée, on peut rechercher la structure fibreuse présentant la rigidité suffisante pour que le ruban final présente bien la rigidité visée.

A titre indicatif, voici l'ordre de rigidité de certaines structures textiles, à dimensions externes égales et à densité égales, de la plus rigide à la moins rigide: structure tissée > structure tressée > structure tricotée > roving. Par ailleurs, plus la masse surfacique de la structure fibreuse est élevée et plus elle est rigide. Par ailleurs, une armure de tissage de type taffetas sera plus rigide qu'une armure sergé, elle-même plus rigide qu'une armure satin.

On peut aussi jouer sur la formulation de la résine pour augmenter la rigidité du ruban final. En règle générale, à taux de polymère donné dans la résine, on peut augmenter sa viscosité, et donc la rigidité du ruban final, en augmentant la masse moléculaire dudit polymère. On peut aussi diminuer la viscosité de la résine en augmentant le taux de plastifiant ou de lubrifiant ou de monomère (et plus généralement de molécules de bas poids moléculaire) qu'elle contient. Pour une structure fibreuse donnée incorporée dans un ruban avec généralement plus de 30 % de taux volumique de fibres, on peut donc augmenter la rigidité du ruban en augmentant la proportion de molécules à fort poids moleculaire dans la résine. Ceci revient aussi à augmenter la viscosité de la résine, un compromis étant à trouver entre la nécessité d'imprégner facilement les fibres et celle de conférer de la rigidité au ruban.

Le ruban doit être collant à la température prévue pour le placement de fibre. On peut influencer ce collant en jouant notamment sur le taux de lubrifiant ou de plastifiant dans la résine. Une augmentation du taux de lubrifiant ou de plastifiant diminue le collant. Un lubrifiant peut par exemple être un Alkylbenzène, alkoxylé ou non. Des mélanges de composés lubrifiants sont aussi utilisables. Les lubrifiants ont aussi souvent un effet plastifiant en favorisant le glissement entre les chaines de polymères.

Pour réaliser le ruban selon l'invention présentant à la fois le collant voulu et la rigidité souhaitée à une température donnée, on peut partir d'une résine présentant du collant à ladite température et lui associer une structure fibreuse suffisamment rigide pour que le ruban atteigne la rigidité visée.

Le ruban présente généralement une largeur comprise entre 1 et 100 mm de largeur et une épaisseur allant de 0,1 à 0,5 mm d'épaisseur. Sa largeur va plus généralement de 3 à 24 mm, et est de façon très courante de 6,35 mm. Le ruban peut être un roving, un tissé, un non-tissé, un tricot. Dans le cas d'un tissu, la trame peut être coupée ou non-coupée du fait de l'utilisation d'une navette. Dans le cas d'un roving, celui-ci peut être direct ou indirect. Pour un roving direct, on rassemble des fibres directement sous les filières en une mèche et l'on imprègne en continu (dans la foulée) cette mèche par de la résine, par exemple selon la technique dite de l'ensimage anhydre. Dans le cas d'une résine thermodurcissable, cette résine peut par exemple être appliquée sur la mèche à l'aide de deux rouleaux, l'un appliquant le polymère de base de la résine, le second appliquant le durcisseur. Pour un roving indirect, on fibre d'abord par des filières et l'on rassemble différentes fibres en une mèche, puis on enroule cette mèche sur une bobine qui peut être stockée. On procède en un deuxième temps à l'imprégnation du roving par de la résine comme pour le roving direct après déroulement de la bobine de roving.

L'invention concerne aussi un procédé de fabrication du ruban selon l'invention comprenant le fibrage de fibres de quartz suivi d'une imprégnation desdites fibres par un ensimage anhydre comprenant l'application d'un premier composant liquide comprenant un polymère et le cas échéant un silane (pour l'obtention d'un bon interface entre la fibre et le polymère) puis l'application d'un second composant liquide comprenant un durcisseur du polymère, les fibres étant ensuite assemblées et embobinées en roving, un intercalaire (généralement une feuille plastique comme le Mylar ou un PE ou le PTFE) étant généralement disposé entre chaque couche afin de limiter le collage des couches entre elles. Selon ce procédé, il est inutile de passer par une étape intermédiaire de constitution d'un gateau (« cake » en anglais). Pour réaliser une fibre de quartz, on peut par exemple procéder à l'étirement d'une extrémité fondue d'une baguette de silice de diamètre inférieur à 7 mm, généralement de diamètre allant de 2 à 6 mm, dans un brûleur oxy-propane afin de l'amener à un diamètre de filament inférieur à 0,5 mm. Ce filament peut alors être ré-étiré par étirage à la flamme dans un second bruleur oxy-propane. Les filaments de quartz ainsi obtenus ont généralement un diamètre inférieur à 50 µm, et de manières optimales centrées sur 9 µm, par exemple entre 5 et 15 µm. Ce procédé ne fait pas appel à des filières.

Généralement, on conserve le ruban en bobine avant utilisation dans la technique dite du placement de fibre. Le ruban contient la résine faisant ultérieurement office de matrice du futur matériau composite.

Dans le cas d'une résine thermodurcissable, la résine contient le durcisseur qui provoquera, après mise en forme par la machine de placement de fibres, la solidification de la matrice par polymérisation ou réticulation. Pour que le ruban ne durcisse pas avant utilisation, on conserve généralement celui-ci à froid, généralement à une température comprise entre -5 et -25°C et plus généralement autour de -16°C. Dans le cas d'une résine thermodurcissable, le placement des brins de ruban est généralement réalisé à une température inférieure à 40°C, généralement à température ambiante, généralement entre 10 et 40°C. La résine durcit dès lors que la structure composite est soumise à un traitement thermique (généralement compris entre 80°C et 220°C) permettant le durcissement par polymérisation ou réticulation.

Dans le cas d'une résine thermoplastique, on conserve généralement le ruban pré imprégné à température ambiante. On applique le ruban lors de la technique du placement de fibre à chaud à une température à laquelle il a un tack adapté à cette technique. On utilise généralement des résines thermoplastiques nécessitant de fortes températures pour les ramollir et les rendre collante, de façon à ce que le matériau composite final puisse bien supporter les températures d'utilisation, lesquelles sont inférieures à celle utilisée lors du placement des brins de ruban.

Pour son utilisation, le ruban est appliqué par la technique du placement de fibre à une température à laquelle il présente un tack suffisant pour que les brins posés par la machine de placement de fibre adhèrent là où ils sont placés en conservant la forme de ce sur quoi ils sont placés (soit le moule, soit des segments de rubans déjà posés). Cette technique permet notamment de croiser différents brins de ruban ou tout du moins de poser différents brins dans des directions très différentes. Le ruban selon l'invention est continu, suffisamment souple pour être enroulable en bobine. Pour la mise en forme par la machine de placement de fibres, Il est déroulé, posé pour mise en forme et coupé par ladite machine. Le tack du ruban est donc suffisant pour coller lors de la mise en forme mais pas trop pour ne pas gêner le déroulage de la bobine. On optimise les températures de déroulement de la bobine de ruban et de pose des brins de ruban de façon à atteindre ces propriétés de tack ou d'absence de tack.

Quand le placement de fibres est réalisé on laisse durcir la résine en portant le matériau final à une température de durcissement.

On peut utiliser une résine thermoplastique dont la température de transition vitreuse Tg va de 80 à 250°C. Dans le cas d'une résine thermoplastique, elle est appliquée lors du placement de fibres à une température supérieure à Tg, le retour à une température provoquant son durcissement. Ici également, il suffit de laisser la pièce formée revenir à la température ambiante (généralement entre 10 et 40°C).

L'invention concerne également un procédé de fabrication d'un matériau composite comprenant des courbures par la technique du placement de fibres comprenant la pose et découpe sur un moule comprenant des courbures du ruban selon l'invention, ladite pose et découpe étant réalisés à une température à laquelle le ruban présente simultanément du collant et une rigidité allant de 5 à 30°, suivi du durcissement de la résine. Notamment, le moule peut comprendre des zones dont la surface est courbée dans toutes les directions.

L'invention concerne également le matériau composite réalisé par le procédé selon l'invention. Ce matériau composite peut notamment être un radome pouvant équiper un engin volant.

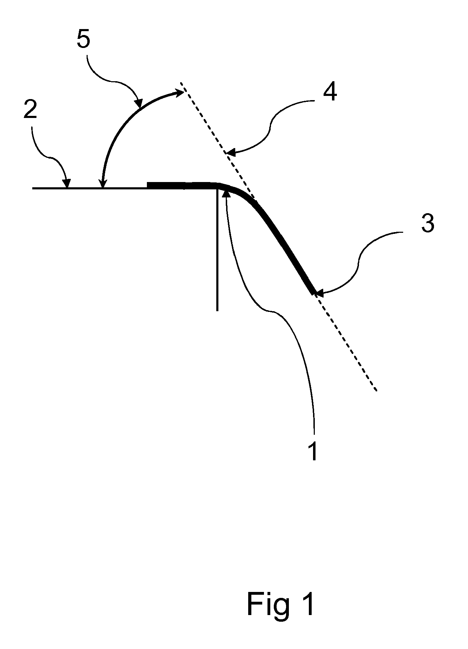

La figure 1 illustre la méthode de mesure du ruban selon l'invention. Le ruban 1 imprégné de résine non-durci comme cela le sera au niveau du matériau final (en fait à la température de placement de fibre) est posé sur 5 cm sur une surface 2. Il est posé tout d'abord rectiligne et l'on attend la fin de l'affaissement de la partie du ruban non supportée. On trace la tangente 4 au ruban 1 passant par son extrémité 3 non-supportée par la surface 2. La rigidité est exprimée par l'angle 5 formé par l'horizontale passant par la surface 2 et la tangente 4.

### Exemple 1 :

Un ruban de fils de quartz à partir de fil C9 33X2 Quartzel QS1318 / Armure Satin de 8/280 gr/m² est réalisé par tissage sur métier à ruban à navette. Cette technologie permet d'éviter d'avoir des lisières coupés ce qui peut poser problème sur le raccord des différents rubans côte à côte. Le ruban est fabriqué en largeur 6,35 mm. Ce ruban est alors imprégné de résine époxy ou cyanate ester à hauteur de 60% en volume de fibres. Une résine tout à fait adapté à ce type d'imprégnation est une résine cycloaliphatique de type ARALDIT CY184 DE HUNTSMAN de viscosité 700-900 mPa.s. Ce système peut être utilisé avec un durcisseur de type anhydride cycloaliphatique modifié. L'ARADUR HY 1235 de HUNTSMAN est un bon candidat pour ce type d'application. Le mélange résine/durcisseur est à hauteur de 60/40 en poids. On peut ajouter une résine à fort poids moléculaire par exemple de type PY 307-1 (du type époxy) afin de rigidifier la structure pour la rendre compatible avec la rigidité nécessaire demandé par le procédé de placement de fibres. Ce type de composition thermodurcissable permet de travailler avec des solutions très fluides pour l'imprégnation. Le ruban est alors conservé au froid à -16°C. Avec un mélange à 80 % de PY307/1, 10% de CY184 et 10 % d'ARADUR HY 1235, on obtient un ruban avec une rigidité de 15° à 20°C. Le taux d'imprégnation est de 40 % en volume. Le tack est satisfaisant à 20°C. On peut l'utiliser en direct sur les machines de placement de fibres.

### Exemple 2

Un ruban de verre E de fil C9 68 tex / Armure Satin de 5/280 gr/m² est réalisé par tissage sur métier à ruban aiguille de marque Muller. Par cette technologie les lisières sont coupées. Le ruban est fabriqué en largeur 6,35 mm. Il est alors imprégné de résine époxy ou cyanate ester à hauteur de 60% en volume de fibres. La résine d'imprégnation utilisée est une époxy NOVOLAC de viscosité moyenne 30 000 à 50 000 mPa.s à 20°C par exemple l'ARALDITE PY307-1. L'EPON 828 de HEXION peut également être utilisé. Le produit est utilisé avec un catalyseur de type ACTIRON NX3 (2,4,6-tris(dimethylaminomethyl)phénol) ou NX91 (benzyldiméthylamine) de SYNTHRON-PROTEX. Avec un mélange de type ARALDITE PY307-1 à 60%,18,5 % d'ARALDITE DY-D, 18,5 % d'ARALDITE DY-E et 3% d'ACTIRON NX 3, on obtient un ruban de rigidité de 13°. Le taux d'imprégnation est de 40 % en volume. Le tack est satisfaisant. Le ruban est conservé au froid à -16°C. On peut l'utiliser en direct sur les machines de placement de fibres.

### Exemple 3

Un tissu de fils de verre D de fil C9 68 tex / Armure Satin de 5/280 gr/m² est réalisé par tissage. Il est réalisé sur métier à lance. Le tissu est alors imprégné de résine cyanate ester à hauteur de 65% en volume de fibres. On utilise par exemple la résine AROCY L10 de HUNTSMAN. Celle ci est mélangée à une poudre thermoplastique tel que les polysulfones (UDEL P1800), polyéther sulfone (VICTREX 5003P), polyétherimide (Ultem 1000), thermoplastique Polyimide (Matrimid 5218) ou des résines époxy par exemple de type glycidyl. Un système de catalyseur à base de Cobalt, zinc ou carboxylate de cuivre est utilisé comme catalyseur pour la cuisson de la résine. Ce type de composition permet des systèmes très fluides intéressants pour le placement de fibres. On peut ajouter une résine à fort poids moléculaire par exemple de type AROCY B50 afin de rigidifier la structure pour la rendre compatible avec la rigidité nécessaire demandée par le procédé placement de fibres. Le tissu imprégné est alors découpé en ruban dans la largeur nécessaire au placement de fibres. Le ruban est généralement réalisé en largeur 6,35 mm. Avec un mélange de type AROCY B50 à 60%-AROCY L10 à 40%, on obtient un ruban de rigidité de 20° à 20°C avec un taux d'imprégnation de 35 % en volume. Le tack est satisfaisant. Le ruban est alors conservé au froid à -16°C. On peut l'utiliser en direct sur les machines de placement de fibres.

### Exemple 4

Un roving assemblé est réalisé à partir de fil de verre Low Dk glass. Le nombre de bouts (« ends » en anglais) de roving est calculé afin d'obtenir la largeur de roving nécessaire au placement de fibres. Le roving est alors imprégné avec une résine diélectrique de type PTFE. Avec un taux de fibres de 50% en volume, une rigidité de 10° peut être obtenue. La mise en forme par placement de fibres à base de résine PTFE est difficile à 20°C compte tenu du faible tack du PTFE à 20°C. Le ruban est alors conservé à température ambiante. On peut l'utiliser en direct sur les machines de placement de fibres.

### Exemple 5

Un roving direct en verre S2 est fabriqué directement après fibrage du matériau de renfort dans la largeur spécifiée. Le roving est alors imprégné avec une résine diélectrique de type Polyimide. Le tack est satisfaisant. Le ruban est alors conservé au froid à -16°C. On peut l'utiliser en direct sur les machines de placement de fibres.

### Exemple 6

Un roving direct en fibres de quartz Quartzel est fabriqué directement après fibrage du matériau de renfort dans la largeur spécifié. Ce roving est imprégné juste après fibrage par un système d'ensimage anhydre composé d'un constituant A et d'un constituant B. Le constituant A est un mélange de résine époxy PY307 - 1 avec un silane de type A1128 (ratio 95/5) et le constituant B est un mélange d'un durcisseur de type ACTIRON NX91 avec un plastifiant de type Ethyl Hexyl Adipate (ratio 95/5). Ces constituants sont chauffés à 40°C afin de les fluidifier. Les niveaux de fluidité recherchée sont inferieurs à 30000 mPa.s et même inférieur à 10000 mPa.s. Avec ce type de composition, un ruban avec un taux d'imprégnation de 50 % en volume présente une rigidité de 25° à 20°C. Son tack est satisfaisant. Le ruban est alors conservé au froid à -16°C. On peut l'utiliser en direct sur les machines de placement de fibres.

### Exemple 7

Un ruban de fibres est imprégné par la technologie dite Tow Imprégnation of Uniredirectional fiber preform avec une résine Polyester. Le ruban est alors conservé au froid à -16°C. Son tack est satisfaisant. On peut l'utiliser en direct sur les machines de placement de fibres.

### Exemples 8 à 13

On a utilisé dans tous les cas en tant que structure fibreuse du roving de Quartz C14 24x80 Tex avec ensimage QS1318. Le taux de fibre dans le ruban était de 60% en volume (40% de résine en volume). On a estimé ici la souplesse (inverse de la rigidité) du ruban final à 20°C par une valeur allant de 0 (rigidité maximale) à 10 (très souple). Une souplesse de 1 à 3 correspond sensiblement à une rigidité comprise entre 5 et 30°. Les résultats sont compilés dans le tableau 3.

**Tableau 3**

| **POLYMERE** | **MARQUE (FOURNISSEUR)** | ex 8 | ex 9 | ex 10 | ex 11 | ex 12 | ex 13 |
|---|---|---|---|---|---|---|---|
| Epoxy phénol novolac | Araldite PY 307-1 (Huntsman) | 60 | 58 | | | 24 | |
| Polybutadiène (MW 1200) Diglycidyléther | PolyBD 600 (Sartomer) | | | 60 | 48 | 24 | 21 |
| Epoxyde base cycloaliphatique | Araldite CY 205 (Huntsman) | | | | | | 24 |
| | | | | | | | |

| **MONOMERE** | | | | | | | |
|---|---|---|---|---|---|---|---|
| Cyclohexane diméthanol diglycidyléther | Araldite DY-C (Huntsman) | | | 18,5 | 24,5 | 24,5 | 19 |
| Butanediol diglycidyléther | Araldite DY-D (Huntsman) | 18,5 | 18 | | | | 18 |
| Laurylglycidyléther | Araldite DY-E (Huntsman) | 18,5 | 18 | 18,5 | 24,5 | 24,5 | |
| | | | | | | | |

| **PLASTIFIANT** | | | | | | | |
|---|---|---|---|---|---|---|---|
| Ethyl hexyl adipate | Ethyl Hexyl Adipate | | | | | | 15 |

| **CATALYSEUR** | | | | | | | |
|---|---|---|---|---|---|---|---|
| Tris(diméthylaminométhyl)phénol | Actiron NX 3 (Protex Syntron) | 3 | 6 | 3 | 3 | 3 | 3 |
| | | | | | | | |
| **RESULTATS** | **SOUPLESSE (0 à 10)** | **1** | **3** | **9** | **8** | **5** | **6** |

## Revendications

1. Ruban continu comprenant une structure fibreuse comprenant de la fibre continu ou discontinue et une résine présentant du collant à une température allant de la température ambiante à 300°C ledit ruban présentant à 20°C et 9,375 Ghz une constante diélectrique comprise entre 2 et 7 et une tangente diélectrique comprise entre 1.10⁻⁴ et 3.10⁻², ladite structure fibreuse étant suffisamment rigide pour que ledit ruban présente une rigidité comprise entre 5 et 30° à une température à laquelle ladite résine présente du collant, la rigidité du ruban étant mesurée à partir d'un segment de 15 cm de long rectiligne dont 5 cm sont posés sur le bord d'une surface horizontale, les 10 cm non supportés s'affaissant pour former un angle avec l'horizontale caractérisant la rigidité du ruban.

2. Ruban selon la revendication précédente, **caractérisé en ce que** sa constante diélectrique est inférieure à 3,5.

3. Ruban selon la revendication précédente, **caractérisé en ce que** sa largeur est comprise entre 1 et 100 mm et son épaisseur va de 0,1 à 0,5 mm.

4. Ruban selon la revendication précédente, **caractérisé en ce que** sa largeur va de 3 à 24 mm

5. Ruban selon l'une des revendications précédentes, **caractérisé en ce qu'**il contient entre 30 et 80% en volume de fibres.

6. Ruban selon l'une des revendications précédentes, **caracterisé en ce que** sa rigidité est comprise entre 8° et 22°.

7. Ruban selon l'une des revendications précédentes, **caractérisé en ce qu'**il comprend de la fibre comprenant plus de 50% en poids de SiO₂.

8. Ruban selon la revendication précédente, **caractérisé en ce qu'**il comprend de la fibre comprenant plus de 90% en poids de SiO₂.

9. Ruban selon l'une des revendications précédentes, **caractérisé en ce que** la résine est du type époxy ou cyanate ester.

10. Procédé de fabrication d'un ruban de l'une des revendications précédentes comprenant le fibrage de fibres de quartz suivi d'une imprégnation des dites fibres par un ensimage anhydre par l'application d'un premier composant liquide comprenant un polymère puis l'application d'un second composant liquide comprenant un durcisseur du polymère, les fibres étant ensuite assemblées et bobinés en roving.

11. Procédé de fabrication d'un matériau composite comprenant des courbures par la technique du placement de fibres comprenant la pose et découpe sur un moule comprenant des courbures du ruban de l'une des revendications de ruban précédentes ladite pose et découpe étant réalisés à une température à laquelle le ruban présente simultanément du collant et une rigidité allant de 5 à 30°, suivi du durcissement de la résine.

12. Procédé selon la revendication précédente, **caractérisé en ce que** le moule comprend des zones dont la surface est courbée dans toutes les directions.

13. Matériau composite réalisé par le procédé de l'une des deux revendications précédentes.

14. Radome en matériau composite selon la revendication précédente.

15. Engin volant comprenant le radome de la revendication précédente.

## Patentansprüche

1. Endlosband, das eine Faserstruktur mit Endlos- oder Stapelfaser sowie ein Harz, das bei einer Temperatur von der Umgebungstemperatur bis 300 °C klebrig ist, umfasst, wobei das Band bei 20 °C und 9,375 GHz eine Dielektrizitätskonstante zwischen 2 und 7 sowie eine Dielektrizitätstangente zwischen 1.10⁻⁴ und 3.10⁻² aufweist, wobei die Faserstruktur steif genug ist, damit das Band bei einer Temperatur, bei der das Harz klebrig ist, eine Steifigkeit zwischen 5 und 30° aufweist, wobei die Steifigkeit des Bandes anhand eines geradlinigen Abschnittes mit einer Länge von 15 cm gemessen wird, wovon 5 cm auf den Rand einer horizontalen Fläche gelegt sind, wobei die nicht gestützten 10 cm nachgeben, um mit der Horizontalen einen die Steifigkeit des Bandes kennzeichnenden Winkel zu bilden.

2. Band nach dem vorhergehenden Anspruch, **dadurch gekennzeichnet, dass** seine Dielektrizitätskonstante geringer als 3,5 ist.

3. Band nach dem vorhergehenden Anspruch, **dadurch gekennzeichnet, dass** seine Breite zwischen 1 und 100 mm beträgt und seine Dicke von 0,1 bis 0,5 mm reicht.

4. Band nach dem vorhergehenden Anspruch, **dadurch gekennzeichnet, dass** seine Breite von 3 bis 24 mm reicht.

5. Band nach einem der vorhergehenden Ansprüche, **dadurch gekennzeichnet, dass** es zwischen 30 und 80 Vol.-% Fasern enthält.

6. Band nach einem der vorhergehenden Ansprüche, **dadurch gekennzeichnet, dass** seine Steifigkeit zwischen 8° und 22° beträgt.

7. Band nach einem der vorhergehenden Ansprüche, **dadurch gekennzeichnet, dass** es Faser mit mehr als 50 Gew.-% SiO₂ umfasst.

8. Band nach dem vorhergehenden Anspruch, **dadurch gekennzeichnet, dass** es Faser mit mehr als 90 Gew.-% SiO₂ umfasst.

9. Band nach einem der vorhergehenden Ansprüche, **dadurch gekennzeichnet, dass** das Harz vom Typ Epoxid oder Cyanatester ist.

10. Verfahren zur Herstellung eines Bandes nach einem der vorhergehenden Ansprüche, umfassend das Ziehen von Quarzfasern, an das sich ein Imprägnieren der Fasern mit einem wasserfreien Schmälzmittel durch Aufbringen einer ersten flüssigen Komponente, die ein Polymer umfasst, dann Aufbringen einer zweiten flüssigen Komponente, die ein Mittel zur Härtung des Polymers umfasst, anschließt, wobei die Fasern anschließend zusammengefügt und als Roving aufgewickelt werden.

11. Verfahren zur Herstellung eines Krümmungen aufweisenden Verbundwerkstoffes durch die Technik des Anordnens von Fasern, umfassend das Auflegen und Abschneiden, auf einer Krümmungen aufweisenden Form, des Bandes nach einem der vorhergehenden Band-Ansprüche, wobei das Auflegen und Abschneiden bei einer Temperatur vollzogen werden, bei der das Band gleichzeitig klebrig ist und eine Steifigkeit von 5 bis 30° aufweist, woran sich das Härten des Harzes anschließt.

12. Verfahren nach dem vorhergehenden Anspruch, **dadurch gekennzeichnet, dass** die Form Bereiche aufweist, deren Oberfläche in alle Richtungen gekrümmt ist.

13. Verbundwerkstoff, der durch das Verfahren nach einem der beiden vorhergehenden Ansprüche hergestellt ist.

14. Radom aus Verbundwerkstoff nach dem vorhergehenden Anspruch.

15. Fluggerät, das das Radom des vorhergehenden Anspruchs umfasst.

## Claims

1. A continuous tape comprising a fibrous structure comprising continuous or discontinuous fibers and a resin that is tacky at a temperature ranging from room temperature to 300°C, said tape having at 20°C and 9.375 GHz a dielectric constant of between 2 and 7 and a dielectric loss tangent of between 1×10⁻⁴ and 3×10⁻², said fibrous structure being rigid enough for said tape to have a rigidity of between 5° and 30° at a temperature at which said resin is tacky, the rigidity of the tape being measured with a 15 cm long rectilinear segment, a 5-cm piece of which is placed on the edge of a horizontal surface, the unsupported 10 cm sagging to make an angle to the horizontal, which angle characterizes the rigidity of the tape.

2. The tape as claimed in the preceding claim, **characterized in that** its dielectric constant is less than 3.5.

3. The tape as claimed in the preceding claim, **characterized in that** its width is between 1 and 100 mm and its thickness ranges from 0.1 to 0.5 mm.

4. The tape as claimed in the preceding claim, **characterized in that** its width ranges from 3 to 24 mm.

5. The tape as claimed in one of the preceding claims, **characterized in that** it contains between 30 and 80 vol% of fibers.

6. The tape as claimed in one of the preceding claims, **characterized in that** its rigidity is between 8° and 22°.

7. The tape as claimed in one of the preceding claims, **characterized in that** it comprises fiber comprising more than 50 wt% of SiO₂.

8. The tape as claimed in the preceding claim, **characterized in that** it comprises fiber comprising more than 90 wt% of SiO₂.

9. The tape as claimed in one of the preceding claims, **characterized in that** the resin is an epoxy or a cyanate ester.

10. A process for manufacturing the tape of one of the previous claims, comprising the fiberization of quartz fibers followed by impregnation of said fibers with an anhydrous size by the application of a first liquid component comprising a polymer, and then by the application of a second liquid component, comprising a polymer hardener, the fibers then being assembled into a roving and wound.

11. A process for manufacturing a multi-curvature composite by the fiber placement technique comprising the placement of the tape of one of the previous tape claims onto a multi-curvature mold and the cutting thereof, said placement and cutting being carried out at a temperature at which the tape exhibits simultaneously a tack and a rigidity ranging from 5 to 30°, followed by curing of the resin.

12. The process as claimed in the preceding claim, **characterized in that** the mold comprises regions the surfaces of which are curved in all directions.

13. The composite produced by the process of either of the two preceding claims.

14. A radome made of a composite as claimed in the previous claim.

15. A flying machine comprising the radome of the previous claim.
